# EUROPÄISCHE PATENTANMELDUNG

(11) **EP 4 390 221 A1**
(43) Veröffentlichungstag der Anmeldung: **26.06.2024**
(21) Anmeldenummer: 23220024.6
(22) Anmeldetag: 22.12.2023
(51) Int. Cl.: F23C 99/00

(54) **OFEN MIT INTEGRIERTER WASSERSTOFFERZEUGUNG**

(30) Priorität: 23.12.2022 CH 15722022
(71) Anmelder: Lutz, André, 8712 Stäfa (CH)
(72) Erfinder: Lutz, André, 8712 Stäfa (CH)
(74) Vertreter: Keller Schneider Patent- und Markenanwälte AG

(57) **Zusammenfassung**

Die vorliegende Erfindung betrifft einen Ofen und ein Verfahren zum Betreiben eines Ofens. Aus zugeführtem Wasser stellt ein im Ofen erhitzter I<atalysator Wasserstoffgas und Sauerstoffgas her, welches zur Verbrennung in die Brennkammer des Ofens geleitet wird.

## Beschreibung

### Technisches Gebiet

Die vorliegende Erfindung betrifft eine Ofen zur Verbrennung von Brennstoff. Solche Öfen haben eine Brennkammer, eine Lufteintrittsöffnung und eine Abgasaustrittsöffnung. Gattungsgemässe Öfen sind etwa Heizöfen, Öfen zur Stromgewinnung und Industrieöfen für Herstellungsprozesse (z.B. Hochöfen).

### Stand der Technik

Öfen sind Vorrichtung zur kontrollierten Erzeugung von Wärme. Die Wärmeerzeugung erfolgt durch Verbrennung von Brennstoffen, wie z.B. Brennholz oder fossilen Brennstoffen wie Gas, Öl und/oder I<ohle. Öfen existieren in verschiedenen Bauformen und für verschiedene Anwendungszwecke, beispielsweise zur Verwendung als Heizöfen, Öfen zur Stromgewinnung und Industrieöfen für Herstellungsprozesse (z.B. Hochöfen).

Bei Öfen wird stets eine möglichst saubere Verbrennung und/oder effiziente Wärmegewinnung angestrebt. In diesem Zusammenhang beschreibt die JPS5731707 (Heimu International) ein Verfahren um den Verbrauch von kohlenstoffhaltigem Brennstoff einzusparen. Hierbei erhitzt ein Brenner zum Verbrennen des kohlenstoffhaltigen Brennstoffs eine Wassercrackvorrichtung, um Wasserstoff zu erzeugen, der durch die Flamme des Brenners verbrannt wird. In der Praxis ist hat sich dieses Verfahren aber als wenig effizient herausgestellt.

Es besteht daher nach wie vor Bedarf nach verbesserten Öfen, welche diese Nachteile möglichst überwinden.

### Darstellung der Erfindung

Es ist eine Aufgabe der Erfindung, einen verbesserten Ofen bereitzustellen. Insbesondere ist es eine Aufgabe der Erfindung einen Ofen bereitzustellen, der Brennstoff spart bei gleichbleibender Wärmeerzeugung bzw. die Wärmeerzeugung steigert bei gleichbleibender Brennstoffmenge. Eine weitere Aufgabe der Erfindung ist es einen Ofen zu schaffen, der pro erzeugter Wärmemenge weniger Emissionen verursacht. Eine weitere Aufgabe der Erfindung ist es einen Ofen zu schaffen, dessen Abgas weniger Schadstoffe enthält. Diese Aufgaben lassen sich auch übertragen auf das erfindungsgemässe Verfahren zum Betreiben eines Ofens.

Die Lösung der Aufgabe ist durch die Merkmale der unabhängigen Ansprüche definiert.

Die vorliegende Erfindung betrifft demnach einen Ofen, welcher aufweist: (a) eine Brennkammer zum Verbrennen von Brennstoff, (b) eine Lufteintrittsöffnung, (c) eine Abgasaustrittsöffnung, (d) einen rohrförmigen Reaktor, der in der Brennkammer angeordnet ist und einen Wasserzugang aufweist und (d) eine Wasserzuführeinheit, die dazu ausgebildet ist, dem Rohr über den Wasserzugang Wasser zuzuführen, wobei das Rohr weiterhin aufweist: (i) einen I<atalysator, der im Inneren des Rohrs angeordnet und dazu ausgebildet ist, aus dem Wasser Wasserstoffgas und Sauerstoffgas herzustellen, und (ii) Gasaustrittsöffnungen, die am unteren Ende des Rohrs angeordnet und dazu ausgebildet sind, das Wasserstoffgas und das Sauerstoffgas in die Brennkammer zu leiten.

Insbesondere ist der Reaktor lotrecht oder zumindest gegen die Horizontale geneigt angeordnet.

Insbesondere ist der rohrförmige Reaktor als ein Rohr ausgeführt, welches beispielsweise im Profil kreisrund ist. Allerdings kann das Rohr auch andere Profile aufweisen, d.h. beispielsweise einen n-eckigen Querschnitt haben.

Insbesondere verbrennen das Wasserstoffgas und das Sauerstoffgas in der Brennkammer und verbessern somit die Wärmegewinnung und/oder die Emissionen, z.B. in Form von NOₓ werden reduziert. Das dabei entstehende Wasser wird mit dem Abgas über die Abgasaustrittsöffnung ausgeleitet.

Insbesondere kann der Brennstoff mindestens einen von festen, flüssigen oder gasförmigen Brennstoffen enthalten.

Insbesondere kann es sich beim Brennstoff etwa um Holz, Holzpellets, Holzkohle, Braunkohle, Steinkohle, Erdgas, Biogas, Öl, Methanol, Ethanol und/oder Kerosin handeln.

Insbesondere ist der I<atalysator dazu ausgebildet, aus dem Wasser Wasserstoffgas und Sauerstoffgas unter Einfluss von Wärme herzustellen. Der I<atalysator ermöglicht im Speziellen eine besonders effiziente thermochemische Spaltung von Wasser in Wasserstoff und Sauerstoff.

In manchen Ausführungsformen ist der Reaktor lotrecht und mittig in der Brennkammer angeordnet.

In manchen Ausführungsformen weist der Ofen weiterhin einen ersten Temperatursensor auf, der an der Wasserzuführeinheit angeordnet ist, wobei die Wasserzuführeinheit dazu ausgebildet ist, dem Reaktor über den Wasserzugang das Wasser zuzuführen, wenn der erste Temperatursensor eine Temperatur grösser oder gleich 100 °C misst.

Insbesondere ist die Wasserzuführeinheit dazu ausgebildet, dem Reaktor über den Wasserzugang das Wasser nicht mehr zuzuführen, wenn die mit dem ersten Temperatursensor gemessene Temperatur 100 °C unterschreitet.

In manchen Ausführungsformen weist der Ofen weiterhin einen zweiten Temperatursensor auf, der am Reaktor angeordnet ist, wobei die Wasserzuführeinheit dazu ausgebildet ist, dem Reaktor über den Wasserzugang das Wasser zuzuführen, wenn der zweite Temperatursensor eine Temperatur grösser oder gleich 400 °C misst.

In manchen Ausführungsformen weist der Reaktor eine Länge von zwischen 30 und 70 Zentimeter auf.

In manchen Ausführungsformen weist der Reaktor einen Durchmesser von zwischen 2 und 6 Zentimetern auf.

Insbesondere weist der Reaktor eine Wandstärke von zwischen 2 und 4 Millimetern auf.

In manchen Ausführungsformen liegen zwischen 2 und 20 Gasaustrittsöffnungen vor, welche jeweils einen Durchmesser von zwischen 2 und 4 Millimetern aufweisen.

In manchen Ausführungsformen weist der I<atalysator eine poröse Struktur auf und ist mit einer auf Platin basierenden Schicht beschichtet.

In manchen Ausführungsformen ist die Wasserzuführeinheit dazu ausgebildet, dem Reaktor über den Wasserzugang zwischen 0.1 und 20 Milligramm Wasser pro Sekunde zuzuführen.

Insbesondere besteht der Reaktor aus Stahl, Chromstahl, oder Wolfram. Alternativ kann der Reaktor Wolfram enthalten.

Insbesondere ragt die Wasserzuführeinheit als eine Rohrleitung in die Brennkammer hinein, ausgehend von einem externen Wasserbehälter, welcher einen Mindestabstand zum Ofen von einem Meter hat.

Insbesondere liegt der Ofen in Form eines Kanonenofens vor. Selbstverständlich ist der Ofen in weiteren Formen ausführbar, insbesondere auch in Industrieöfen bzw. -brennern.

Insbesondere ist die Brennkammer durch Schamottestein ausgekleidet.

Insbesondere ist die Brennkammer so ausgebildet, dass das Feuer im Brennbetrieb den Reaktor rundherum umgibt.

Insbesondere ist der Reaktor an seinem oberen und unteren Ende geschlossen, abgesehen von den Gasaustrittsöffnungen.

Insbesondere sind die Gasaustrittsöffnungen als Düsen ausgeformt. Solche Düsen können derartig verjüngend geformt sein, dass die Wasserstoff- und Sauerstoffgase in die Brennkammer hineinbeschleunigt werden, sodass sie sich darin ausbreiten und so eine grossflächigere Verbrennung stattfinden kann.

Insbesondere umfasst die Wasserzuführeinheit eine Wasserleitung, welche durch den Wasserzugang in den Reaktor hineinragt.

Insbesondere ist der Wasserzugang eine Bohrung im Reaktor, die aber zwischen Reaktor und Wasserzuführeinheit abgedichtet ist.

Insbesondere kann die poröse Struktur durch ein zwei- oder dreidimensionales Gitter verkörpert sein. Alternativ kann die poröse Struktur ein I<näuel von Fasern oder Strängen sein. Ein weiteres Beispiel für eine poröse Struktur sind gewebte, gewirkte oder gestrickte Netze. Noch eine alternative poröse Struktur kann durch I<ugeln oder Granulat erzielt werden, die etwa in einem Käfig beisammengehalten werden.

Insbesondere hat der beschichtete I<atalysator ein Trägermaterial, welches zum Beispiel ein Stahl oder eine Keramik ist. Alternativ kann der Katalysator auch gänzlich aus Platin bestehen.

Die Erfindung betrifft weiterhin eine Verfahren zum Betreiben eines Ofens gemäss der Beschreibung hierin, wobei das Verfahren die folgenden Schritte aufweist: (a) Verbrennen des Brennstoffs in der Brennkammer, (b) Zuführen von Wasser in den Reaktor, (c) Verdampfen des Wassers im Reaktor, (d) Spalten des Wasserdampfs am Katalysator in Wasserstoffgas und Sauerstoffgas, (e) Einleiten des Wasserstoffgases und des Sauerstoffgases in die Brennkammer und (f) Verbrennen des Wasserstoffgases und des Sauerstoffgases in der Brennkammer.

Insbesondere werden Wasserstoffgas und Sauerstoffgas dabei zusammen mit dem Brennstoff in der Brennkammer des Ofens verbrannt.

Insbesondere ist das durch die Abgasaustrittsöffnung austretende Abgas sauberer, weil das zusätzliche Verbrennen des Wasserstoffgases und des Sauerstoffgases die Temperatur in der Brennkammer stark erhöht, insbesondere auf etwa 1500 °C, womit Brennstoff mengenmässig eingespart bzw. langsamer verbrannt werden kann (etwa durch Herunterregeln der Luftzufuhr). Andererseits kann der Brennstoff bei diesen hohen Temperaturen sauberer verbrennen.

Insbesondere passiert Schritt (d) unter Einfluss von Wärme.

Insbesondere kann der Ofen so ausgebildet sein, dass dem Reaktor das Wasser durch die Wasserzuführeinheit über den Wasserzugang nur dann zugeführt wird, wenn eine Temperatur an der Wasserzuführeinheit, insbesondere an deren Auslass, grösser oder gleich 100 °C ist. Diese Temperatur kann durch einen ersten Temperatursensor gemessen werden, den man an oder neben der Wasserzuführeinheit anordnet.

Insbesondere kann der Ofen so ausgebildet sein, dass dem Reaktor das Wasser nicht mehr zugeführt wird, wenn die Temperatur an der Wasserzuführeinheit 100 °C unterschreitet.

Insbesondere kann der Ofen so ausgebildet sein, dass dem Reaktor das Wasser durch die Wasserzuführeinheit über den Wasserzugang nur dann zugeführt wird, wenn eine Temperatur am Katalysator grösser oder gleich 400 °C ist. Diese Temperatur wiederum kann durch einen zweiten Temperatursensor gemessen werden, den man am oder neben dem Katalysator anordnet.

Insbesondere wird Schritt (b) so ausgeführt, dass dem Reaktor über den Wasserzugang zwischen 0.1 und 20 Milligramm Wasser pro Sekunde zugeführt wird.

### Kurze Beschreibung der Zeichnungen

Weitere Vorteile der vorliegenden Erfindung sind aus der detaillierten Beschreibung und der Zeichnung ersichtlich.

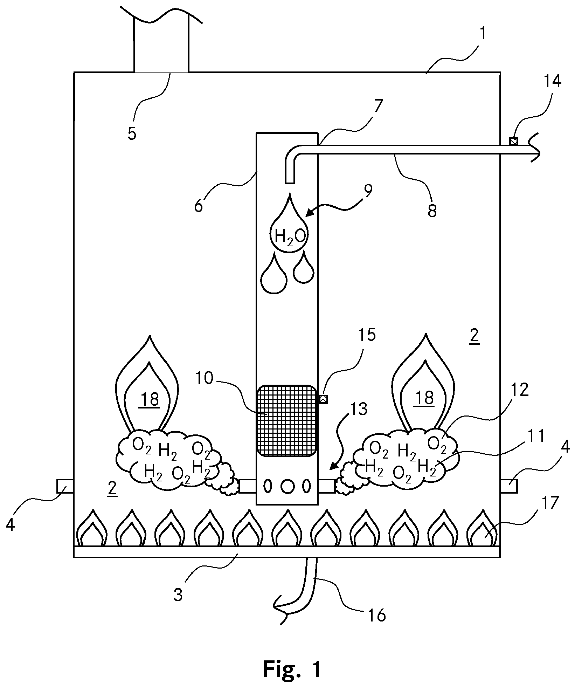

Figur 1 ist eine schematische Skizze eines Ausführungsbeispiels der vorliegenden Erfindung.

### Wege zur Ausführung der Erfindung

Figur 1 zeigt einen Ofen 1, der hier beispielhaft als Kanonenofen ausgeführt ist und mit Erdgas 3 befeuert wird. Durch eine Brennstoffzuleitung 16 gelangt der Brennstoff 3 in die Brennkammer 2, wo er verbrannt wird und Brennstoffflammen 17 erzeugt. Der zur Verbrennung benötigten Luftsauerstoff gelangt über Lufteintrittsöffnungen 4 in die Brennkammer. Das bei der Verbrennung entstehende Abgas kann über die Abgasaustrittsöffnung 5 aus dem Ofen hinausströmen, etwa zu einem Schornstein.

Erfindungsgemäss weist der Ofen einen rohrförmigen Reaktor 6 auf, welcher hier als Rohr 6 ausgeführt ist und lotrecht in der Brennkammer 2 angeordnet ist. Bevorzugt ist das Rohr 6 derart angeordnet, dass es sich in der Mitte der Brennkammer 2 befindet, sodass die aufsteigende Hitze das Rohr gleichmässig umgibt.

Das Rohr 6 weist einen Wasserzugang 7 auf, welcher hier durch eine Bohrung im Rohr 6 realisiert ist, die zwischen Rohr 6 und Wasserzuführeinheit 8 abgedichtet ist. Durch diesen Wasserzugang 7 erhält eine Wasserzuführeinheit 8 Zugang zum Inneren des Rohrs. Die Wasserzuführeinheit 8 ist dazu ausgebildet, dem Rohr Wasser 9 zuzuführen. Bevorzugt erfolgt dies buchstäblich tröpfchenweise, d.h. zum Beispiel 0.2 Milligramm pro Sekunde oder 0.72 Litern pro Stunde entspricht.

Der hier gezeigte Bestandteil der Wasserzuführeinheit ist als eine Wasserleitung 8 ausgeführt und dringt in die Brennkammer 2 hinein, ausgehend von einem externen Wasserbehälter (nicht dargestellt), welcher einen Abstand zum Ofen 1 von 1,5 Metern hat.

Spätestens beim Auftreffen auf einen Katalysator 10, welcher im Rohr angeordnet ist, verdampft das Wasser 9 und wird gespalten in Wasserstoffgas und Sauerstoffgas. Verdampft das Wasser bereits vorher, so staut sich oberhalb des Katalysators eine Wasserdampfwolke an, die dann mit jedem weiteren zugeführten Tropfen weiter hinabgedrückt wird.

Über Gasaustrittsöffnungen 13, die am unteren Ende des Rohrs angeordnet sind, werden das Wasserstoffgas und das Sauerstoffgas in die Brennkammer geleiten, wo sie in einer bis zu 1500°C heissen I<nallgasflamme 18 verbrennen und somit den Gesamthitzeertrag des Ofens steigern.

Die Flammen 17 sind hier der Übersicht halber klein dargestellt, können aber sinngemäss höher hinaufsteigen, insbesondere soweit, dass der Katalysator 10 unmittelbar von Feuer umgeben ist.

Bevorzugt ist die Fähigkeit des Katalysators 10 aus dem Wasser 9 Wasserstoffgas 11 und Sauerstoffgas 12 herzustellen durch den Einfluss von Wärme begünstigt. Insbesondere ist diese Fähigkeit ab Katalysator-Temperaturen von 400 °C optimal. Daher weist der hier gezeigte Ofen 1 einen Temperatursensor 15 auf, der im gezeigten Beispiel an der Aussenseite des Rohrs 6 angeordnet ist. Der Ofen 1 bzw. die Wasserzuführeinheit 8 kann nun dazu ausgebildet sein, dem Rohr 6 über den Wasserzugang 7 das Wasser 9 erst dann oder nur dann zuzuführen, wenn der besagte Temperatursensor 15 eine Temperatur grösser oder gleich 400 °C misst.

Eine weitere Grundlage für den Betrieb der Wasserzuführeinheit 8 können die Messwerte eines weiteren Temperatursensors 14 sein. Dieser weitere Temperatursensor 14 ist im gezeigten Beispiel an der Wasserzuführeinheit 8 ausserhalb des Ofens 1 angeordnet. Der Ofen 1 bzw. die Wasserzuführeinheit 8 ist nun derart ausgebildet, dass sie nur dann Wassertropfen 9 ausgibt, wenn der Temperatursensor 14 eine Temperatur grösser oder gleich 100 °C misst. Damit ist sichergestellt, dass das Wasser 9 sogleich in den dampfförmigen Zustand übergeht bzw. in einem solchen Zustand im Reaktor 6 ankommt.

I<ühlt der Ofen 1 ab, etwa weil die Brennstoffzufuhr heruntergeregelt wurde oder kein Brennstoff mehr nachgelegt wurde, so kann mindestens eine der Mindesttemperaturen (400 °C am Sensor 15 und 100 °C am Sensor 14) unterschritten werden, wodurch die Wasserzuführeinheit 8 dann aufhören würde, Wasser 9 zuzuführen.

Das Rohr hat eine bevorzugte Länge von zumindest ungefähr 50 Zentimetern. Das Rohr hat ausserdem einen bevorzugten Durchmesser von zumindest ungefähr einem Inch, also etwa 2.54 Zentimetern. Weiterhin ist seine Wandstärke 3 Millimetern. Das Rohr ist aus einem hitzebeständigen oder wolframhaltigen Stahl gefertigt und hat 8 Gasaustrittsöffnungen 13, welche jeweils einen Durchmesser von 3 Millimetern haben. Das Rohr ist kreisrund im Durchschnitt und an seinem oberen und unteren Ende geschlossen, z.B. durch Verschweissen eines Deckels, sodass Gasaustrittsöffnungen 13 die einzige Entweichmöglichkeit darstellen. Entsprechend kann die Wasserzuführeinheit 8 ein Ventil aufweisen, welches das Entweichen des Wasserdampfs oder der aufgespaltenen Gase zurück in den Wasserbehälter vermeidet.

Der Katalysator 10 ist hier vergleichsweise klein dargestellt. Er kann jedoch auch einen Grossteil des Rohrs 6 oder das ganze Rohr 6 ausfüllen.

Der Katalysator enthält ein dreidimensionales Gitter, welches dadurch eine sehr grosse Oberfläche besitzt. Das Grundmaterial ist Stahl und die besagte Oberfläche ist mit einer sehr dünnen Lage aus purem Platin beschichtet, welches mit seiner katalytischen Wirkung das Wasser 9 in Wasserstoff 11 und Sauerstoff 12 spaltet.

Es hat sich herausgestellt, dass das durch die Abgasaustrittsöffnung 5 austretende Abgas sauberer ist, weil das zusätzliche Verbrennen des Wasserstoffgases und des Sauerstoffgases die Temperatur in der Brennkammer stark erhöht, wodurch Brennstoff mengenmässig eingespart bzw. langsamer verbrannt werden kann (etwa durch Herunterregeln der Luftzufuhr). Andererseits kann der Brennstoff bei diesen hohen Temperaturen effizienter verbrennen.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

### Bezugszeichenliste

| | |
|---|---|
| 1 | Ofen |
| 2 | Brennkammer |
| 3 | Brennstoff |
| 4 | Lufteintrittsöffnung |
| 5 | Abgasaustrittsöffnung |
| 6 | Rohr |
| 7 | Wasserzugang |
| 8 | Wasserzuführeinheit |
| 9 | Wasser |
| 10 | Katalysator |
| 11 | Wasserstoffgas |
| 12 | Sauerstoffgas |
| 13 | Gasaustrittsöffnungen |
| 14 | Erster Temperatursensor |
| 15 | Zweiter Temperatursensor |
| 16 | Brennstoffzuleitung |
| 17 | Brennstoffflammen |
| 18 | Knallgasflammen |

## Patentansprüche

1. Ofen (1) aufweisend:
eine Brennkammer (2) zum Verbrennen von Brennstoff (3),
eine Lufteintrittsöffnung (4),
eine Abgasaustrittsöffnung (5),
einen rohrförmigen Reaktor (6), der in der Brennkammer (2) angeordnet ist und einen Wasserzugang (7) aufweist, und
eine Wasserzuführeinheit (8), die dazu ausgebildet ist, dem Reaktor (6) über den Wasserzugang (7) Wasser (9) zuzuführen,
wobei der Reaktor (6) weiterhin aufweist:
einen I<atalysator (10), der im Inneren des Reaktors (6) angeordnet und dazu ausgebildet ist, aus dem Wasser (9) Wasserstoffgas (11) und Sauerstoffgas (12) herzustellen, und
Gasaustrittsöffnungen (13), die am unteren Ende des Reaktors (6) angeordnet und dazu ausgebildet sind, das Wasserstoffgas (11) und das Sauerstoffgas (12) in die Brennkammer (2) zu leiten.

2. Ofen (1) gemäss Anspruch 1, wobei der Reaktor (6) lotrecht und mittig in der Brennkammer (2) angeordnet ist.

3. Ofen (1) gemäss einem der vorangehenden Ansprüche, aufweisend einen ersten Temperatursensor (14), der an der Wasserzuführeinheit (8) angeordnet ist, wobei die Wasserzuführeinheit (8) dazu ausgebildet ist, dem Reaktor (6) über den Wasserzugang (7) das Wasser (9) zuzuführen, wenn der erste Temperatursensor (14) eine Temperatur grösser oder gleich 100 °C misst.

4. Ofen (1) gemäss einem der vorangehenden Ansprüche, aufweisend einen zweiten Temperatursensor (15), der am Reaktor (6) angeordnet ist, wobei die Wasserzuführeinheit (8) dazu ausgebildet ist, dem Reaktor (6) über den Wasserzugang (7) das Wasser (9) zuzuführen, wenn der zweite Temperatursensor (15) eine Temperatur grösser oder gleich 400 °C misst.

5. Ofen (1) gemäss einem der vorangehenden Ansprüche, wobei der Reaktor (6) eine Länge von zwischen 30 und 70 Zentimetern aufweist.

6. Ofen (1) gemäss einem der vorangehenden Ansprüche, wobei der Reaktor (6) einen Durchmesser von zwischen 2 und 6 Zentimetern aufweist.

7. Ofen (1) gemäss einem der vorangehenden Ansprüche, wobei zwischen 2 und 20 Gasaustrittsöffnungen (13) vorliegen, welche jeweils einen Durchmesser von zwischen 2 und 4 Millimetern aufweisen.

8. Ofen (1) gemäss einem der vorangehenden Ansprüche, wobei der I<atalysator (10) eine poröse Struktur aufweist und mit einer auf Platin basierenden Schicht beschichtet ist.

9. Ofen (1) gemäss einem der vorangehenden Ansprüche, wobei die Wasserzuführeinheit (8) dazu ausgebildet ist, dem Reaktor (6) über den Wasserzugang (7) zwischen 0.1 und 20 Milligramm Wasser (9) pro Sekunde zuzuführen.

10. Verfahren zum Betreiben eines Ofens (1) gemäss einem der vorangehenden Ansprüche, aufweisend die Schritte:
Verbrennen des Brennstoffs (3) in der Brennkammer (2),
Zuführen von Wasser (9) in den Reaktor (6),
Verdampfen des Wassers (9) im Reaktor (6),
Spalten des Wasserdampfs am I<atalysator (10) in Wasserstoffgas (11) und Sauerstoffgas (12),
Einleiten des Wasserstoffgases (11) und des Sauerstoffgases (12) in die Brennkammer (2),
Verbrennen des Wasserstoffgases (11) und des Sauerstoffgases (12) in der Brennkammer (2).
